**Europäisches Patentamt**

**European Patent Office**

**Office européen des brevets**

(19)

(11) Numéro de publication: **0 211 778**
**B1**

(12) # FASCICULE DE BREVET EUROPÉEN

(45) Date de publication du fascicule du brevet:
31.05.89

(51) Int. Cl.⁴: **F 16 L 37/08**

(21) Numéro de dépôt: **86420174.4**

(22) Date de dépôt: **27.06.86**

(54) Raccord à griffes.

(30) Priorité: **02.07.85 FR 8510598**

(43) Date de publication de la demande:
**25.02.87 Bulletin 87/9**

(45) Mention de la délivrance du brevet:
**31.05.89 Bulletin 89/22**

(84) Etats contractants désignés:
**AT BE CH DE FR GB IT LI LU NL SE**

(56) Documents cité:
**GB-A-2 060 106**
**US-A-3 837 687**

(73) Titulaire: **PARKER HANNIFIN RAK, Z.I. du Mont Blanc, F-74100 Annemasse (FR)**

(72) Inventeur: **Badoureaux, Jean- Pierre, 27 rue du Saget, F-74100 Annemasse (FR)**

(74) Mandataire: **Maureau, Pierre, Cabinet GERMAIN & MAUREAU B.P. 3011, F-69392 Lyon Cédex 03 (FR)**

EP 0 211 778 B1

## Description

La présente invention concerne un raccord à griffes pour tubes souples ou tubes rigides éventuellement munis d'une gorge annulaire externe, c'est-à-dire un raccord du type présentant un alésage traversant et, à l'une de ses extrémités, un embout fileté mâle ou femelle pour sa liaison amovible à l'un des deux organes à relier à l'aide de ce tube et, à son autre extrémité, une chambre annulaire coaxiale à son alésage et logeant, outre un joint d'étanchéité annulaire et une bague de retenue fermant partiellement la chambre annulaire, et dans une zone sensiblement médiane, une pièce annulaire présentant des griffes inclinées en direction du fond de la chambre et faisant saillie radialement à l'intérieur de la chambre depuis sa paroi extérieure en délimitant un diamètre intérieur normalement inférieur au diamètre extérieur du tube de liaison, cette chambre annulaire étant destinée à recevoir et retenir l'une des extrémités du tube de liaison par simple engagement jusqu'à son fond, et le diamètre intérieur de la chambre correspondant au diamètre intérieur du tube, tandis que son diamètre extérieur est supérieur au diamètre extérieur du tube pour permettre de loger le joint d'étanchéité, la pièce à griffes et la bague de retenue.

L'inclinaison des griffes en direction du fond de la chambre annulaire a pour but de faciliter l'engagement du tube et de s'opposer à son désengagement puisqu'un mouvement de recul du tube provoque un basculement des griffes correspondant à leur pénétration dans la paroi du tube.

Avec de tels raccords, et sauf disposition spéciale le permettant, le démontage du tube hors du raccord peut, soit se produire de manière intempestive, soit être rendu impossible sauf destruction, par déchirement, de l'extrémité du tube s'il s'agit d'un tube souple.

En effet, une traction exagérée exercée sur le tube dans le sens de son extraction du raccord, notamment par la pression du fluide, peut, si les griffes sont trop souples, en provoquant leur retournement, permettre la libération intempestive du tube, qu'il soit souple ou rigide.

On peut remédier à cet inconvénient en prévoyant des griffes en un matériau moins souple. Mais alors, dans ce cas, si le tube est souple, les griffes risquent non seulement de le blesser lors de son engagement dans le raccord, en ne s'effaçant pas suffisamment, mais aussi de le déchirer en pénétrant trop profondément dans sa paroi lors d'une traction exercée sur lui dans le sens de soi arrachement hors du raccord. Si le tube est rigide, son démontage est impossible si rien n'est prévu pour le permettre.

Le brevet GB-2 060 106 décrit un raccord à griffes qui remédie aux inconvénients précités en réduisant les risques d'arrachement intempestif du tube de liaison, aussi bien par déchirure de son extrémité s'il est souple et si les griffes sont relativement rigides, que par retournement de ces dernières si elles sont trop souples.

Dans ce raccord, d'une part, le joint d'étanchéité est torique et, d'autre part, à la pièce annulaire à griffes est associée une pièce annulaire de soutien de section transversale sensiblement en L et présentant, de ce fait, un anneau extérieur de même diamètre extérieur que la pièce à griffes et une partie tubulaire intérieure d'un diamètre intérieur normalement égal ou légèrement supérieur au diamètre extérieur du tube de liaison et dont le bord libre est orienté en direction des griffes de la pièce à griffes en vue de limiter, en leur servant d'appui, leur basculement dans le sens de leur pénétration dans la paroi du tube de liaison.

La partie tubulaire de la pièce de soutien apporte effectivement un soutien efficace aux griffes de la pièce à griffes en empêchant leur retournement si elles sont trop souples, ou leur pénétration dans la paroi du tube jusqu'à la déchirer, si elles sont trop rigides et si le tube est souple. Cependant cette pièce de soutien ne participe absolument pas à la retenue du tube dans le raccord, en cas d'efforts d'arrachement, de sorte que tout risque de déchirure du tube n'est pas éliminé.

En outre, si le raccord à griffes est démontable, la bague de retenue disposée à proximité de l'ouverture de la chambre annulaire est montée axialement mobile en direction de la pièce annulaire de soutien et de la pièce annulaire à griffes pour permettre de faire basculer les griffes dans le sens de leur éloignement de la paroi du tube de liaison et de la libération de ce dernier. Or, le joint d'étanchéité disposé entre la bague de retenue et la pièce annulaire de soutien et qui transmet, à la pièce annulaire de soutien, la force axiale communiquée à la bague de retenue pour le soulèvement des griffes est un joint torique.

La forme torique du joint d'étanchéité présente le double inconvénient, d'une part, de ne pas permettre son effacement lors de l'introduction du tube de liaison dans le raccord et, d'autre part, de ne pas faciliter l'extraction du tube après soulèvement des griffes de la pièce à griffes par déplacement axial de la bague de retenue car, étant comprimé axialement entre la pièce de soutien et la bague de retenue, son diamètre intérieur tend à diminuer, ce qui augmente sa pression radiale sur le tube.

La présente invention vise à remédier simultanément à tous ces inconvénients. A cet effet, dans le raccord à griffes qu'elle concerne et qui est du type précité, la partie tubulaire intérieure de la pièce de soutien est formée d'une pluralité de languettes reliées à l'anneau extérieur par leur talon recourbé radialement vers l'extérieur.

Ainsi, lorsque s'exerce sur le tube une force tendant à l'arracher du raccord, l'effort exerce axialement par les griffes sur les languettes provoque leur déformation qui engendre une reduction du diamètre de la partie tubulaire intérieure de la pièce de soutien qui est alors resserrée sur le tube et participe avec les griffes à sa retenue dans le raccord.

Cette disposition a donc pour effet de diminuer les risques de déchirure du tube, s'il est souple.

Suivant une forme d'exécution préférée de l'invention, le joint d'étanchéité annulaire prévu dans la chambre annulaire entre la pièce annulaire à griffes et la bague de retenue disposée du côté de l'ouverture de la chambre annulaire, est un joint à lèvre interne inclinée radialement vers l'intérieur, en direction de la pièce annulaire à griffes et par consequent de la pièce annulaire de soutien.

Outre son rôle d'étanchéité, la lèvre de ce joint, qui ne gêne aucunement l'introduction du tube de liaison dans le raccord, presente l'avantage de renforcer la tenue des languettes qui, lors de leur déformation sous l'action des griffes, peuvent prendre appui contre elle, ce qui a pour effet secondaire de serrer la lèvre du joint contre le tube et d'améliorer l'étanchéité du raccord.

De plus, dans le cas d'un raccord à griffes démontable dans lequel la bague de retenue disposée à proximité de l'ouverture de la chambre annulaire est montée axialement mobile en direction de la pièce annulaire à griffes et de la pièce annulaire de soutien pour permettre de faire basculer les griffes dans le sens de leur effacement et de la libération du tube, la présence de la lèvre intérieure du joint annulaire est mise à profit pour exercer sur les griffes par l'intermédiaire des languettes de la pièce de soutien, la poussée axiale nécessaire à ce basculement.

Par ailleurs, il a été constaté qu'à la longue, la paroi du tube de liaison, notamment s'il est souple, est découpée hélicoïdalement par les griffes de la piece annulaire à griffes. Ce découpage est provoqué par la rotation du tube de liaison dans le raccord dont la pièce annulaire à griffes est solidaire, ces rotations étant évidemment engendrées involontairement par les différents mouvements communiqués à l'autre extrémité du tube de liaison, lorsqu'il est en service.

L'invention vise aussi à éliminer ce risque. A cet effet, suivant une forme d'exécution avantageuse de ce raccord, d'une part, entre le bord périphérique de la partie annulaire externe de la pièce à griffes et la paroi interne la plus extérieure de la partie correspondante lui servant de logement de la chambre annulaire, est ménagé un jeu annulaire et, d'autre part, un jeu axial est menagé entre les parties annulaires externes de la pièce à griffes et de la pièce de soutien, une butée étant interposée entre la pièce à griffes et la pièce de soutien pour limiter la course de la pièce à griffes depuis l'épaulement interne de la chambre annulaire lui servant d'appui, tout en autorisant sa rotation à l'intérieur de cette chambre.

De toute façon, l'invention sera bien comprise à l'aide de la description qui suit, en référence au dessin schématique annexé représentant, à titre d'exemple non limitatif, une forme d'exécution de ce raccord à griffes:

Figure 1 en est une vue de côté en élévation avec demi-coupe axiale le montrant avant engagement du tube de liaison;
Figure 2 est une vue similaire à figure 1, après montage du tube de liaison;
Figure 3 est une vue similaire à figure 2 montrant la position des griffes et des languettes en cas de traction exercée sur le tube de liaison dans le sens de son arrachement hors du raccord;
Figure 4 est une vue similaire à figure 2 illustrant le mode d'utilisation de ce raccord lors du démontage du tube de liaison;
Figure 5 est une vue similaire à figure 1 montrant une variante d'exécution de ce raccord; et
Figure 6 est une vue similaire à figure 2 montrant le raccord de figure 5 après engagement du tube de liaison.

Comme le montre le dessin, ce raccord à griffes (2), qui comporte un alésage traversant (3) présente, à l'une de ses extrémités, c'est-à-dire celle de gauche sur le dessin, un embout fileté ou mamelon (4) pour sa connexion amovible à l'un des deux organes, non visibles sur le dessin, qui doivent être reliés entre eux par un tube de liaison (6). A son autre extrémité, c'est-à-dire celle de droite sur le dessin, ce raccord (2) présente une chambre annulaire (5) concentrique à l'alésage (3) et destinée à recevoir et loger l'une des extrémités du tube de liaison (6).

A l'intérieur de la chambre annulaire (5), et sensiblement dans sa partie médiane, est logée une pièce annulaire à griffes (7), c'est-à-dire une pièce annulaire présentant, le long de son bord intérieur, des griffes ou dents (7a) légèrement inclinées en direction du fond (5a) de la chambre (5), tout en délimitant un diamètre intérieur légèrement inférieur au diamètre extérieur du tube (6).

La pièce annulaire à griffes (7) est maintenue appliquée contre un épaulement interne (5b) de la chambre (5) par une bague (8) avec interposition d'un joint d'étanchéité (9), la bague (8) étant elle-même retenue dans le raccord (2) par un rétreint de l'extrémité libre (2'a) d'une partie en forme de jupe cylindrique (2a) que présente l'extrémité du raccord (2) dans laquelle débouche la chambre (5).

Entre le joint d'étanchéité (9) et la pièce annulaire à griffes (7) est interposee une pièce annulaire de soutien.

Selon l'invention, cette pièce annulaire de soutien est constituée par un anneau extérieur (11a) de même diamètre extérieur que la pièce annulaire à griffes (7) et une partie tubulaire intérieure formée de languettes (11b) reliées à l'anneau (11a) par leur talón (11c) recourbé radialement vers l'extérieur. Le diamètre intérieur de la partie tubulaire formée par les languettes (11b) de la pièce annulaire de soutien (11) est choisi égal ou juste supérieur au diamètre extérieur du tube de liaison (6). La pièce annulaire de soutien (11) est disposée entre la pièce annulaire à griffes (7) et le joint (9) de manière que les extrémités libres de ses languettes (11b) soient orientées en direction des griffes (7a) de la pièce annulaire à griffes (7).

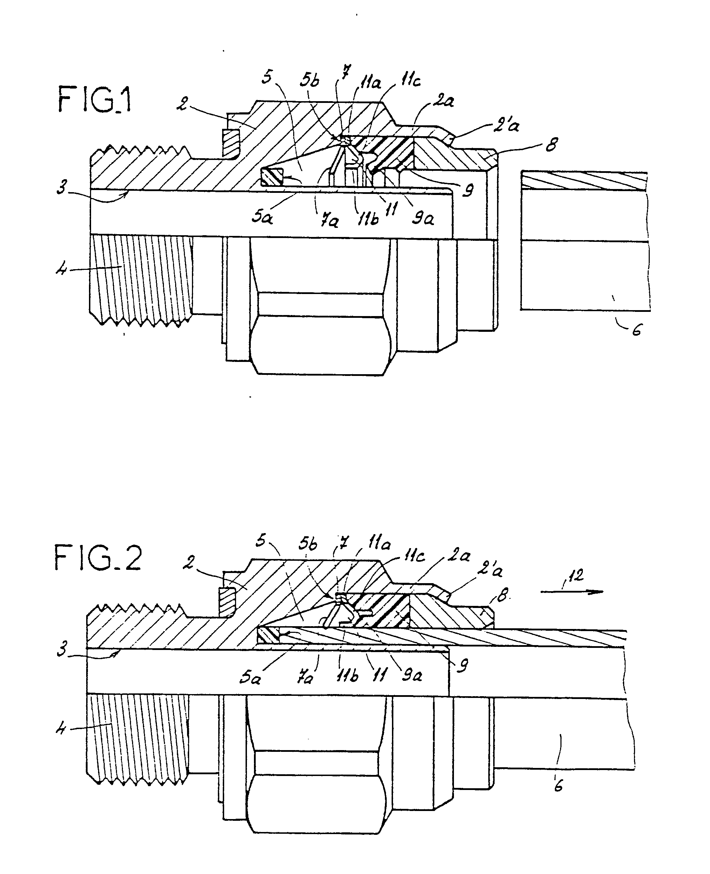

En position de repos du raccord (2), c'est-à-dire avant engagement du tube (6) dans la chambre annulaire (5), comme illustré sur la figure 1, ou, comme illustré sur la figure 2, après engagement du tube (6) dans la chambre annulaire (5), en l'absence de traction exercée sur le tube (6) dans le sens de la flèche (12) correspondant à son arrachement hors du raccord (2), l'inclinaison des griffes (7a) en direction du fond (5a) de la chambre (5) les maintient hors de contact avec les extrémités libres des languettes (11b) de la pièce annulaire de soutien (11).

Dans ces deux situations, la présence de la pièce annulaire de soutien (11) est inutile, mais sans conséquence, puisque le diamètre intérieur de la partie tubulaire formée par les languettes (11b) est égal ou légèrement supérieur au diamètre extérieur du tube (6). Cette pièce annulaire de soutien (11) ne gêne donc pas l'introduction du tube (6) dans la chambre (5). Par contre, cette pièce annulaire de soutien (11) a pour rôle principal de soutenir, et par conséquent de renforcer le rôle des griffes (7a) en cas de force intempestive exercée sur le tube de liaison (6) dans le sens de la flèche (12) tendant à son arrachement hors du raccord (2), en permettant de ce fait l'utilisation d'une pièce annulaire à griffes (7) comportant des griffes (7a) très souples, et par conséquent ne risquant pas de blesser le tube (6) lors de son engagement dans la chambre (5).

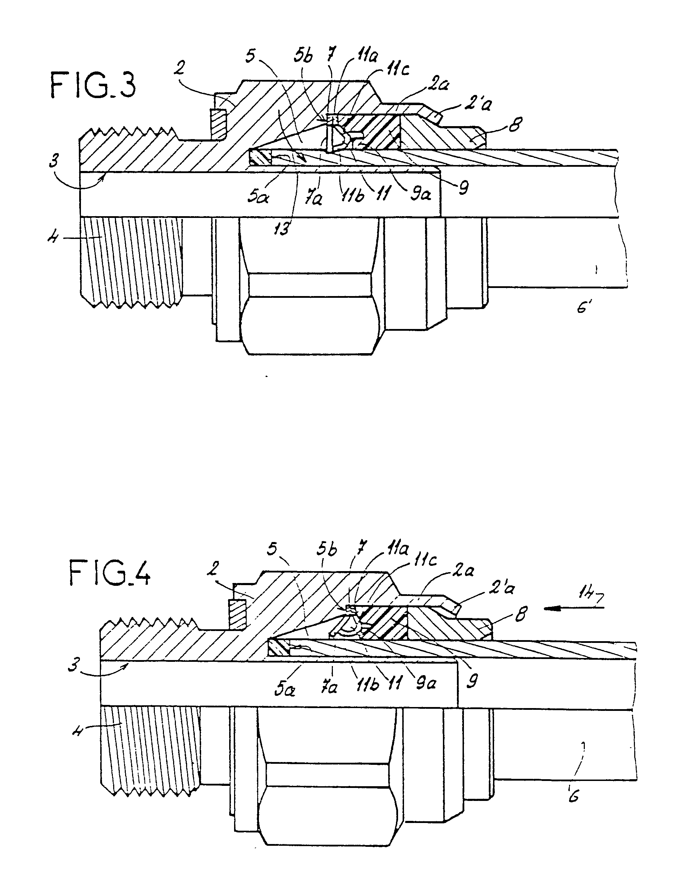

Le rôle précité de la pièce annulaire de soutien (11) est illustré par la figure 3 qui montre la position des éléments de ce raccord à griffes lorsqu'une force de traction est exercée sur le tube (6) dans le sens de la flèche (12), c'est-à-dire tendant à son arrachement hors du raccord (2), par exemple, par suite de la présence d'une pression élevée dans le tube de liaison (6).

On conçoit aisément que dans ce cas, le tube (6) subisse un léger déplacement dans le sens de la flèche (12), déplacement autorisé par le basculement des griffes (7a) de la pièce annulaire à griffes (7) dans le sens de la flèche (13), mais, comme le montre la figure 3, ce basculement est limité à une valeur tolérable par la présence des languettes (11b) de la pièce annulaire de soutien (11) contre les extrémités libres desquelles les griffes (7a) viennent en appui. Cette limitation du basculement des griffes (7a) dans le sens de la flèche (13) évite leur retournement et limite leur pénétration dans la paroi du tube de liaison (6) à une valeur éliminant tout risque de déchirure de cette paroi.

Comme indiqué précédemment, les languettes (11b) peuvent être prévues avec une rigidité suffisante pour assurer ce rôle de soutien puisque, lorsqu'elles sont au repos, elles ne gênent en rien l'introduction du tube (6) dans la chambre (5). Par contre, sous la force exercée axialement contre elles par les griffes (7a), elles peuvent subir une légère déformation élastique en basculant elles aussi dans le sens de la flèche (13), ce qui a pour effet de diminuer le diamètre intérieur de la partie tubulaire qu'elles forment dans la pièce (11) et, par conséquent, de serrer cette partie tubulaire contre la face externe de la paroi du tube (6). Ce serrage a pour effet de faire participer la pièce de soutien (11) à la retenue du tube (6) dans le raccord (2) en soulageant d'autant le rôle des griffes (7a) et en diminuant de ce fait les risques de déchirure de l'extrémité considérée de la paroi du tube (6).

Dans l'exemple illustré sur le dessin, le joint d'étanchéité (9) est du type à lèvre intérieure (9a) car ce type de joint est plus avantageux dans cette application qu'un simple joint torique, en raison de l'action d'amélioration d'étanchéité que peuvent jouer les languettes (11b) de la pièce annulaire de soutien (11) lorsqu'elles sont déformées et agissent par leur talon (11c) contre le bord de la lèvre (9a) du joint (9).

En effet, la déformation des languettes (11b) dans le sens d'une réduction du diamètre intérieur de la partie tubulaire de la pièce annulaire de soutien (11) a pour effet d'exercer aussi sur la lèvre intérieure (9a) du joint d'étanchéité (9) une pression dirigée radialement vers l'intérieur en écrasant cette lèvre contre la paroi du tube (6) et en améliorant ainsi les caractéristiques d'étanchéité du raccord.

Comme cela ressort du dessin, et plus particulièrement de la figure 4, dans le raccord à griffes qui vient d'être décrit, la bague (8), retenue par le rétreint (2'a), est déplaçable axialement dans le sens de la flèche (14) opposé à celui de la flèche (l2), c'est-à-dire en direction des pièces annulaires (7) et (11). Ce déplacement est autorisé par les possiblités de déformation du joint d'étanchéité (9).

La mobilité de la bague (8) dans le sens de la flèche (14) a pour but de permettre de commander, depuis l'extérieur du raccord (2), un basculement des griffes (7a) dans le sens de leur effacement par rapport au tube (6), c'est-à-dire dans le sens opposé à celui de la flèche (13).

Il a été indiqué précédemment que le joint d'étanchéité (9) était avantageusement du type à lèvre intérieure (9a). Cette caractéristique est également intéressante pour faciliter l'effacement des griffes (7a). En effet, la présence de la lèvre (9a) est mise à profit pour exercer sur les talons (11c) des languettes (11b) une poussée axiale dans le sens de la flèche (14) jusqu'à ce que, par suite de leur déformation, elles soulèvent les griffes (7a) comme illustré sur la figure 4.

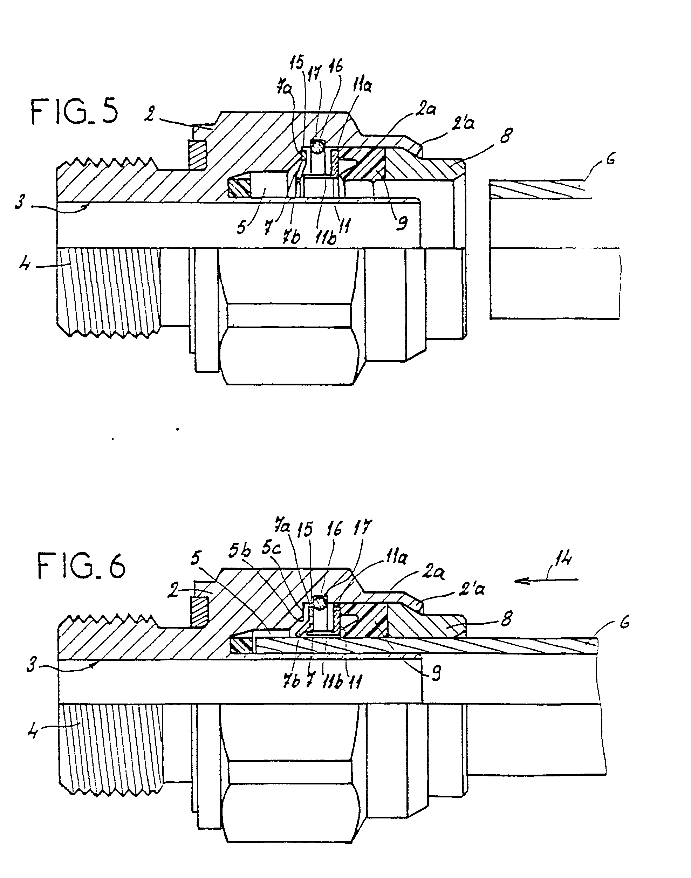

Les figures 5 et 6 illustrent une variante d'exécution de ce raccord à griffes dans laquelle des dispositions ont été prises pour éviter que, lorsque le tube de liaison est pivoté dans le raccord, alors que ce dernier et la pièce annulaire à griffes (7a) qu'il contient sont immobiles en rotation, les griffes (7a) de la pièce à griffes (7) ne tracent un filet hélicoïdal dans la paroi du tube de liaison (6), ce qui a pour conséquence le dévissage du tube (6) hors du raccord.

Sur ces figures 5 et 6, les parties inchangées du raccord ont été désignées par les mêmes références.

Dans cette nouvelle forme d'exécution, on peut remarquer que le diamètre extérieur de la partie annulaire de la pièce à griffes (7) est inférieur à celui de la partie correspondante (5c) de la chambre annulaire (5) lui servant de logement, de manière à ménager, entre la paroi externe de la chambre annulaire (5) et la partie annulaire de la pièce à griffes (7), un jeu périphérique (15) autorisant la libre rotation de la pièce à griffes (7) dans la chambre annulaire (5) par rapport au raccord (2).

En outre, pour éviter que la pièce à griffes (7) ne soit constamment en appui, au moins par sa partie annulaire, contre l'anneau (11a) de la pièce annulaire de soutien (11), ce qui limiterait sa liberté de rotation à l'intérieur du raccord (2) puisque la pièce de soutien (11) prend elle-même appui contre le joint d'étanchéité torique (9), il est prévu une butée axiale limitant la course d'appui de la pièce à griffes (7) depuis l'épaulement (5b) prévu dans la chambre annulaire (5), notamment en cas d'efforts de traction exercés sur le tube de liaison (6) dans le sens tendant à l'extraire du raccord (2), c'est-à-dire dans le sens opposé à la flèche (14).

Dans cet exemple, la butée axiale précitée est constituée par un jonc annulaire fendu (16) partiellement logé dans une gorge (17) ménagée à cet effet dans la paroi externe de la chambre annulaire (5).

Le jeu axial permanent prévu entre l'épaulement (5b) et la butée (16) vise aussi à autoriser la libre rotation de la pièce à griffes (7) à l'intérieur du raccord (2). Ainsi, si en cours d'utilisation le tube de liaison (6) subit, à son extrémité libre (non visible sur le dessin), des mouvements tendant à faire pivoter son extrémité visible sur le dessin à l'intérieur du raccord (2), la pièce à griffes (7) peut alors librement l'accompagner dans cette rotation, sans risquer de blesser sa paroi, ni de tailler un sillon hélicoïdal ayant pour effet d'entraîner le dévissage du tube (6) par rapport à la pièce à griffes (7) et, par conséquent, par rapport au raccord (2).

Comme le montre la figure 6, en position normale d'utilisation et en l'absence de pression exagérée tendant à provoquer l'arrachement du tube (6), la pièce à griffes (7), dont les griffes (7a) sont légèrement ancrées dans la paroi du tube (6) est en appui, par le bord extérieur de sa partie annulaire, contre la butée annulaire (16) et la pression de cet appui est normalement insuffisante pour s'opposer à la libre rotation de la pièce à griffes (7) avec le tube (6) dans le raccord (2).

Pour l'extraction du tube (6) hors du raccord (2), il suffit de procéder avec ce raccord de la même manière qu'avec le raccord des figures 1 à 4, en agissant dans le sens de la flèche (14), sur la bague de retenue (8).

**Revendications**

1. Raccord à griffes pour tubes souples (6) ou tubes rigides éventuellement munis d'une gorge annulaire externe, c'est-à-dire un raccord du type présentant un alésage traversant (3) et, à l'une de ses extrémités, un embout fileté (4) mâle ou femelle pour sa liaison amovible à l'un des deux organes à relier à l'aide de ce tube (6) et, à son autre extrémité, une chambre annulaire (5) coaxiale à son alésage (3) et logeant, outre un joint d'étanchéité annulaire (9) et une bague de retenue (8) fermant partiellement la chambre annulaire (5), et dans une zone sensiblement médiane, une pièce annulaire (7) présentant des griffes (7a) inclinées en direction du fond (5a) de la chambre (5) et faisant saillie radialement à l'intérieur de la chambre (5) depuis sa paroi extérieure en délimitant un diamètre intérieur normalement inférieur au diamètre extérieur du tube de liaison, cette chambre annulaire (5) étant destinée à recevoir et retenir l'une des extrémités du tube de liaison (6) par simple engagement jusqu'à son fond (5a), et les diamètres extérieur et intérieur de la chambre (5) correspondant sensiblement au diamètre extérieur du tube (6), tandis que son diamètre extérieur est supérieur au diamètre extérieur du tube (6) pour lui permettre de loger le joint annulaire (9), la pièce à griffes (7) et la bague de retenue (8), et dans lequel, à la pièce annulaire à griffes (7) est associée une pièce annulaire de soutien (11) présentant un anneau extérieur (11a) de même diamètre extérieur que la pièce annulaire à griffes (7) et une partie tubulaire intérieure, d'un diamètre intérieur normalement égal ou légèrement supérieur au diamètre extérieur du tube de liaison (6) et dont le bord libre est orienté en direction des griffes (7a) de la pièce à griffes (7) en vue de limiter, en leur servant d'appui, leur basculement dans le sens de leur pénétration dans la paroi du tube, caractérisé en ce que la partie tubulaire intérieure est formée d'une pluralité de languettes (11b) reliées à l'anneau (11a) précité par leur talon (11c) recourbé radialement vers l'extérieur.

2. Raccord à griffes selon la revendication 1, caractérisé en ce que le joint d'étanchéité annulaire (9) prévu dans la chambre annulaire (5) entre la pièce annulaire à griffes (7) et la bague de retenue (8) disposée du côté de l'ouverture de la chambre annulaire (5), est un joint à lèvre interne (9a) inclinée radialement vers l'intérieur, en direction de la pièce annulaire à griffes (7) et par conséquent de la pièce annulaire de soutien (11).

3. Raccord à griffes selon la revendication 1 ou la revendication 2, caractérisé en ce que, dans le cas où il est démontable, la bague de retenue (8) disposée à proximité de l'ouverture de la chambre annulaire (5) est montée axialement mobile en direction de la pièce annulaire à griffes (7) et de la pièce annulaire de soutien (11) pour permettre de faire basculer les griffes (7a) dans le sens de leur effacement et de la libération du tube (6), la présence de la lèvre intérieure (9a) du joint annulaire (9) étant mise à profit pour exercer, sur les griffes (7a), par l'intermédiaire des languettes (11b) de la pièce de soutien (11), la poussée axiale necessaire à ce basculement.

4. Raccord à griffes selon l'une quelconque des revendications précédentes, caractérisé en ce que, d'une part, entre le bord périphérique de la partie annulaire externe de la pièce à griffes (7) et la paroi interne la plus extérieure de la partie correspondante lui servant de logement de la chambre annulaire (5), est ménagé un jeu annulaire (15) et, d'autre part, un jeu axial est ménagé entre les parties annulaires externes de la pièce à griffes (7) et de la pièce de soutien (11), une butée étant interposée entre la pièce à griffes (7) et la pièce de soutien (11) pour limiter la course de la pièce à griffes (7) depuis l'épaulement interne (5a) de la chambre annulaire (5) lui servant d'appui, tout en autorisant sa rotation à l'intérieur de cette chambre.

5. Raccord à griffes selon la revendication 4, caractérisé en ce que la butée limitant la course de la pièce à griffes (7) à l'intérieur de la chambre annulaire (5) et depuis l'épaulement (5a) lui servant d'appui dans cette chambre (5) est constituée par un jonc annulaire fendu (16).

**Patentansprüche**

1. Krallenkupplung für weiche oder starre Rohre (6), die gegebenenfalls mit einer ringförmigen äußeren Kehle versehen sind, d.h. Kupplung

- mit einer durchgehenden Bohrung (3) und einem an einem der beiden Enden der Kupplung angeordneten Gewindestutzen oder einer Gewindebuchse (4) zur lösbaren Verbindung mit einem der beiden mit Hilfe des Rohrs (6) miteinander zu verbindenden Teile,

- mit einer an ihrem anderen Ende der Kupplung koaxial zu der genannten Bohrung (3) angeordneten ringförmigen Kammer (5), die eine ringförmige Dichtung (9), ferner einen die ringförmige Kammer (5) teilweise abschließenden Haltering (8) und in einer annähernd in der Mitte gelegenen Zone ein ringförmiges Teil (7) beherbergt, das in Richtung auf den Boden (5a) der Kammer (5) geneigte Krallen (7a) aufweist, die von der Außenwand der Kammer (5) in den Innenraum der Kammer ragen und normalerweise einen Innendurchmesser bestimmen, der kleiner ist als der Außendurchmesser des Rohrs (6),

wobei die ringförmige Kammer (5) eines der Enden des Rohrs (6) aufnehmen und halten kann, indem dieses einfach bis dem zu Boden (5a) der Kammer in diese eingesteckt wird, wobei ferner der Innendurchmesser der Kammer (5) etwa gleich dem Innendurchmesser des Rohrs (6) ist, während der Außendurchmesser der Kammer um so viel größer ist als der Außendurchmesser des Rohrs (6), daß sie die ringförmige Dichtung (9), das Krallenteil (7) und den Haltering (8) aufnehmen kann,

und wobei dem ringförmigen Krallenteil (7) ein Stützteil (11) zugeordnet ist mit einem äußeren Ring (11a), dessen Durchmesser so groß ist wie der Durchmesser des ringförmigen Krallenteils (7), sowie mit einem rohrförmigen Innenteil, dessen Innendurchmesser normalerweise gleich dem Außendurchmesser des Rohrs (6) oder geringfügig größer als dieser ist und dessen freier Rand in Richtung der Krallen (7a) des Krallenteils (7) weist, um diesen als Anschlag zu dienen und ihre Schwenkbewegung in der Richtung, in der sie in die Wandung des Rohrs eindringen, begrenzen,

<u>dadurch gekennzeichnet,</u>

daß das rohrförmige Innenteil aus mehreren Zungen (11b) besteht, die über ihre radial nach außen gebogenen Fersen (11c) mit dem genannten äußeren Ring (11a) verbunden sind.

2. Krallenkupplung nach Anspruch 1, dadurch gekennzeichnet, daß die ringförmige Dichtung (7), die in der ringförmigen Kammer (5) zwischen dem ringförmigen Krallenteil (7) und dem auf der Öffnungsseite der Kammer (5) angeordneten Haltering (8) vorgesehen ist, eine Dichtung mit innerer Dichtungslippe (9a) ist, die radial nach innen in Richtung des ringförmigen Krallenteils (7) und damit des ringförmigen Stützteils (11) geneigt ist.

3. Krallenkupplung nach Anspruch 1 oder 2, dadurch gekennzeichnet, daß für den Fall, daß die Kupplung lösbar sein soll, der in der Nähe der Öffnung der ringförmigen Kammer (5) angeordnete Haltering (8) axial in Richtung auf das ringförmige Krallenteil (7) und das ringförmige Stützteil (11) verschiebbar ist, wodurch die Krallen (7a) sich derart verschwenken lassen, daß sie von dem Rohr (6) zurückweichen und dieses freigeben, wobei die innere Dichtungslippe (9a) der ringförmigen Dichtung (9) dazu benutzt wird, auf die Krallen (7a) über die Zungen (11b) des Stützteils (11) die für das Verschwenken erforderliche axiale Druckkraft auszuüben.

4. Krallenkupplung nach einem der vorhergehenden Ansprüche, dadurch gekennzeichnet, daß einerseits zwischen dem Außenrand des ringförmigen äußeren Teils des Krallenteils (7) und der am weitesten außen liegenden Innenwand des ihm zur Aufnahme dienenden Teils der ringförmigen Kammer (5) ein ringförmiger Zwischenraum (15) vorgesehen ist, daß andererseits zwischen den ringförmigen äußeren Teilen des Krallenteils (7) und des Stützteils (11) ein axiales Spiel vorhanden ist, und daß zwischen dem Krallenteil (7) und dem Stützteil (11) ein Anschlag angeordnet ist, der den an der Innenschulter (5a) der ringförmigen Kammer (5) beginnenden Weg des Krallenteils (7) begrenzt und eine Anlage für das Krallenteil (7) bildet, gleichzeitig aber dessen Drehung im Innern der Kammer ermöglicht.

5. Krallenkupplung nach Anspruch 4, dadurch gekennzeichnet, daß der Anschlag, der den Weg des Krallenteils (7) im Innern der ringförmigen Kammer (5) von deren Innenschulter (5a) aus begrenzt und ihm in dieser Kammer (5) als Anlage dient, aus einem Sprengring (16) besteht.

**Claims**

1. A jaw coupler for flexible tubes (6) or rigid tubes possibly provided with an external annular groove, that is to say a coupler of the type having a bore (3) therethrough and, at one of its ends, a male or female threaded end piece (4) for removably connecting it to one of the two elements to be connected by means of this tube (6) and, at its other end, an annular chamber (5) coaxial with its bore (3) and housing, in addition to an annular seal (9) and a retaining ring (8) partially closing the annular chamber (5), and in a substantially median region, an annular element (7) having jaws (7a) inclined in the direction of the end wall (5a) of the chamber (5) and projecting radially inwardly of the chamber (5) from its external wall, delimiting an internal diameter which is normally smaller than the external diameter of the connecting tube, this annular chamber (5) being intended to receive and retain one of the ends of the connecting tube (6) by simple engagement as far as its end wall (5a), and the external and internal diameters of the chamber (5) corresponding substantially to the external diameter of the tube (6), whilst its external diameter is greater than the external diameter of the tube (6) so as to allow it to house the annular seal (9), the jaw element (7) and the retaining ring (8), and in which there is associated with the annular jaw element (7) an annular support member (11) having an external ring (11a) of the same external diameter as the annular jaw element (7) and an internal tubular portion, of internal diameter normally equal to or slightly greater than the external diameter of the connecting tube (6) and of which the free edge is directed towards the jaws (7a) of the jaw element (7) so that, by serving as a support for them, it may limit the pivoting of the jaws in the direction of their penetration into the wall of the tube, characterised in that the internal tubular portion is formed by a plurality of tongues (11b) connected to the aforementioned ring (11a) by their hooks (11c) which are turned radially outwardly.

2. A jaw coupler according to Claim 1, characterised in that the annular seal (9) provided in the annular chamber (5) between the annular jaw element (7) and the retaining ring (8) disposed at the open side of the annular chamber (5), is a seal having an internal lip (9a) inclined radially inwardly in the direction of the annular jaw element (7) and consequently of the annular support member (11).

3. A jaw coupler according to Claim 1 or Claim 2, characterised in that, if the coupler is capable of disassembly, the retaining ring (8) disposed close to the open side of the annular chamber (5) is mounted to be axially mowable in the direction of the annular jaw element (7) and of the annular support member (11) so as to allow the jaws (7a) to pivot in their retraction direction to free the tube (6), the presence of the internal lip (9a) of the annular seal (9) being used to exert, through the tongues (11b) of the support member (11), the axial thrust necessary for this pivoting.

4. A jaw coupler according to any one of the preceding claims, characterised in that, on the one hand, an annular gap (15) is formed between the peripheral edge of the external annular portion of the jaw element (7) and the outermost internal wall of the corresponding portion of the annular chamber (5) acting as its housing, and, on the other hand, an axial gap is formed between the external annular portions of the jaw element (7) and the support member (11), an abutment being interposed between the jaw element (7) and the support member (11) to limit the travel of the jaw element (7) from the internal shoulder (5a) of the annular chamber (5) which serves to support it, whilst still allowing it to rotate within this chamber.

5. A jaw coupler according to Claim 4, characterised in that the abutment limiting the travel of the jaw element (7) within the annular chamber (5) and from the shoulder (5a) which serves to support it in the chamber (5) is constituted by an annular split ring (16).

FIG.1

FIG.2

FIG.3

FIG.4

FIG_5

FIG.6